# EUROPEAN PATENT APPLICATION

(11) **EP 2 582 003 A1**
(43) Date of publication of application: **17.04.2013**
(21) Application number: 11858473.9
(22) Date of filing: 17.08.2011
(51) Int. Cl.: H02J 3/38, H02M 7/5395

(54) **METHOD AND DEVICE FOR PHOTOVOLTAIC INVERTER CORRECTION AND DRIVING**

(71) Applicant: Shenzhen Invt Electric Co., Ltd., Nanshan District Shenzhen 518055 (CN)
(72) Inventor: CHI, Yinan, Shenzhen, Guangdong 518055 (CN)
(74) Representative: Tischner, Oliver
(86) International application number: PCT/CN2011/078511
(87) International publication number: WO 2013/023367

(57) **Abstract**

A method for adjusting a PV inverter, a method for driving a PV inverter, and apparatuses thereof are provided, which are applicable in the filed of electronic and information technology. The method for adjusting a PV inverter includes: detecting a first output current of a main module in the PV inverter and a second output current of a controlled module in the PV inverter; regulating pulse widths of switching of a power component in the controlled module according to the first output current and the second output current, so that a peak amplitude of the second output current is substantially equal to that of the first output current when the power component in the controlled module is driven according to the regulated pulse widths; and storing difference information between the regulated pulse widths and present pulse widths of switching of a power component in the main module in the PV inverter. It is ensured that the total output current is distributed evenly among the multiple power modules in the PV inverter, thus achieving current balancing.

## Description

### FIELD OF THE INVENTION

The present invention relates to the field of power electronics, and in particular to a method for adjusting a photovoltaic (PV) inverter, a method for driving a PV inverter, and apparatuses thereof.

### BACKGROUND OF THE INVENTION

In the field of photovoltaic conversion, most grid-connected PV inverters employ a multi-level topology structure, which provides the advantage of high efficiency. Generally, a PV inverter is designed with modularity, thereby enabling flexible power configuration and convenient maintenance.

An existing PV inverter includes at least two power modules, one of which is a main module and the rest are controlled modules. Specifically, the main module includes: a controller, e.g., a digital signal processor (DSP); a power component; and a detection circuit, e.g., a Hall element. In the main module, the controller controls driving of the hardware in the main module, i.e., the power component; and the detection circuit detects the output current of the main module and feeds back. The controlled modules include just their respective power components, and driving of the power components in the controlled modules is controlled by the controller in the main module.

The design of the existing PV inverter is required to ensure that there is no difference between driving of the power component in the main module and driving of the power components in the controlled modules, so that the total output current is distributed evenly among the multiple power modules in the PV inverter, thus achieving current balancing. However, in a practical circuit, there is a certain difference between the hardware driving circuits (i.e., power component driving circuits) of the power modules, e.g., there are differences between optocouplers in the driving circuits of the power modules, which affect the widths of driving signals for the power components, i.e., Pulse Width Modulation (PWM) signals, thereby causing unbalanced currents between the power modules in the PV inverter.

### SUMMARY OF THE INVENTION

According to the embodiments of the present invention, a method for adjusting a photovoltaic (PV) inverter, a method for driving a PV inverter, and apparatuses thereof are provided, which can realize current balancing between power modules in a PV inverter.

An embodiment of the present invention provides a method for adjusting a PV inverter, including:
detecting a first output current of a main module in the PV inverter and a second output current of a controlled module in the PV inverter;
regulating pulse widths of switching of a power component in the controlled module according to the first output current and the second output current, so that a peak amplitude of the second output current is substantially equal to that of the first output current when the power component in the controlled module is driven according to the regulated pulse widths; and
storing difference information between the regulated pulse widths of switching of a power component in the controlled module and pulse widths of switching of a power component in the main module in the PV inverter.

An embodiment of the present invention also provides a method for driving a PV inverter, applicable to a PV inverter including a main module and at least one controlled module, wherein the method includes:
sending, by a controller in the main module, control signals for controlling driving of a power component in the main module and driving of a power component in the controlled module;
driving, by a driving circuit for the power component in the main module, the power component in the main module according to pulse widths of the control signals; and
obtaining, by a driving circuit for the power component in the controlled module, difference information stored in the PV inverter, compensating for the pulse widths of the control signals according to the difference information, and driving the power component in the controlled module according to the compensated pulse widths, the difference information being different information between pulse widths of switching of the power component in the controlled module and pulse widths of switching of the power component in the main module.

An embodiment of the present invention provides an apparatus for adjusting a PV inverter, including:
a detecting unit, adopted to detect a first output current of a main module in the PV inverter and a second output current of a controlled module in the PV inverter;
a regulating unit, adopted to regulate pulse widths of switching of a power component in the controlled module according to the first output current and the second output current, so that a peak amplitude of the second output current is substantially equal to that of the first output current when the power component in the controlled module is driven according to the regulated pulse widths; and
a storage unit, adopted to store difference information between the regulated pulse widths of the power component in the controlled module and present pulse widths of switching of a power component in the main module in the PV inverter.

An embodiment of the present invention also provides a PV inverter, including a storage module, a main module and at least one controlled module, wherein the main module includes a controller, a power component and a driving circuit for the power component, and the controlled module includes a power component and a driving circuit for the power component;
the controller is adopted to send control signals for controlling driving of a power component in the main module and driving of power components in the controlled module;
the driving circuit for the power component in the main module is adopted to drive the power component in the main module according to pulse widths of the control signals;
the driving circuit for the power component in the controlled module is adopted to obtain difference information stored in the PV inverter, compensate for the pulse widths of the control signals according to the difference information, and drive the power component in the controlled module according to the compensated pulse widths, the difference information being different information between pulse widths of switching of the power component in the controlled module and pulse widths of switching of the power component in the main module; and
the storage module is adopted to store the difference information between pulse widths corresponding to each controlled module and pulse widths corresponding to the main module.

According to the embodiments of the present invention, a first output current of a main module in the PV inverter and a second output current of a controlled module in the PV inverter are detected; pulse widths of switching of a power component in the controlled module is regulated according to the first output current and the second output currents, so that a peak amplitude of the second output current is substantially equal to that of the first output current when the power component in the controlled module is driven according to the regulated pulse widths; and difference information between the regulated pulse widths and present pulse widths of switching of a power component in the main module is stored in the PV inverter. Therefore, it is ensured that the total output current is distributed evenly among the multiple power modules in the PV inverter, thus achieving current balancing.

### BRIEF DESCRIPTION OF THE DRAWINGS

For a better understanding of the technical solutions in the embodiments of the present invention and the prior art, accompanying drawings used in description of the embodiments and the prior art are briefly described below. Clearly, these drawings are merely some embodiments of the present invention, and those skilled in the art can obtain other drawings based on these drawings without inventive effort.

Figure 1 is a structural diagram illustrating a PV inverter according to an embodiment of the present invention;

Figure 2 is a flow chart of a method for adjusting a PV inverter according to an embodiment of the present invention;

Figure 3 is a schematic diagram illustrating respective output currents of power modules and the total output current in an embodiment of the present invention;

Figure 4 is a structural diagram illustrating a two-level PV inverter in an embodiment of the present invention;

Figure 5 is a flow chart of regulating driving of a power component in a controlled module included in a two-level PV inverter according to an embodiment of the present invention;

Figure 6 is a structural diagram illustrating power factor regulation in an embodiment of the present invention;

Figure 7 is a structural diagram illustrating a three-level PV inverter in an embodiment of the present invention;

Figure 8 is a schematic diagram illustrating the relationship between a current and a voltage applied to a three-level PV inverter in an embodiment of the present invention;

Figure 9 is a flow chart of regulating driving of a power component in a controlled module included in a three-level PV inverter according to an embodiment of the present invention;

Figure 10 is a structural diagram illustrating an apparatus for adjusting a PV inverter according to an embodiment of the present invention;

Figure 11 is a structural diagram illustrating another apparatus for adjusting a PV inverter according to an embodiment of the present invention;

Figure 12 is a structural diagram illustrating another apparatus for adjusting a PV inverter according to an embodiment of the present invention;

Figure 13 is a structural diagram illustrating a PV inverter according to an embodiment of the present invention; and

Figure 14 is a flow chart illustrating a method for driving a PV inverter according to an embodiment of the present invention.

### DETAILED DESCRIPTION OF THE EMBODIMENTS

The technical solutions in the embodiments of the present invention will be described hereinafter in detail in conjunction with the accompanying drawings of the embodiments of the present invention. Clearly, the embodiments described herein are merely some embodiments of the present invention. Any other embodiment made by those skilled in the art based on the embodiments herein without inventive effort shall fall within the scope of protection of the present invention.

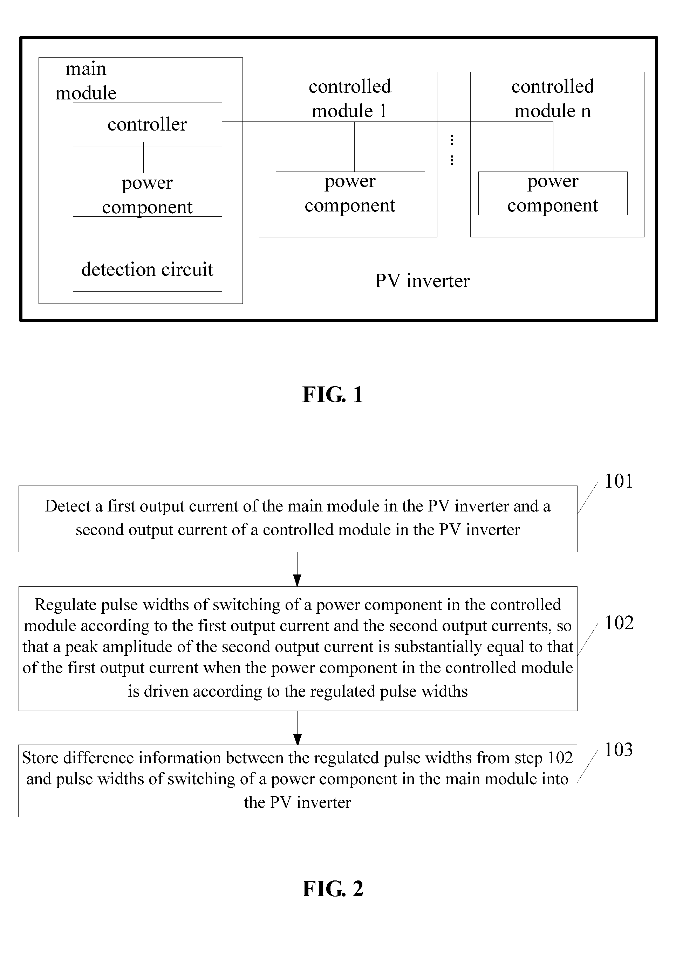

An embodiment of the present invention provides a method for adjusting a PV inverter, suitable for online adjustment of a grid-connected PV inverter, i.e., adjustment of a PV inverter currently connected to an electrical grid. Figure 1 shows the structure of a PV inverter, which includes at least two power modules, one of which is a main module and the rest are controlled modules. Specifically, the main module includes a controller, a power component and a detection circuit. In the main module, the controller controls driving of the hardware in the main module, i.e., the power component; and the detection circuit detects the output current of the main module and feeds back. The controlled modules 1 to n include just their respective power components, and driving of the power components in the controlled modules is controlled by the controller in the main module. The controller may be a Digital Signal Processor (DSP), a Central Processing Unit (CPU) or the like. The power components may include such devices as switching tubes.

It will be appreciated that, in the process of controlling driving of a power component, the controller sends control signals, i.e., switching signals (e.g., PWM signals), which is converted by a driving circuit into signals that can drive the power component to switch on and off. An optocoupler is connected between the controller and the power component, for isolating between high-voltage and low-voltage.

To realize even distribution of the total output current among the multiple power modules (including the main module) in the PV inverter, and current balancing, it is desired to adjust driving of the power components in the PV inverter, so that there is no difference between drivings of respective hardware in the power modules (including the main module). Specifically, the adjusting can be realized by the following method, and Figure 2 shows a flow chart.

Step 101: detecting a first output current of the main module in the PV inverter and a second output current of a controlled module in the PV inverter.

The detecting of output currents of the power modules in the PV inverter may be implemented with a current testing device connected to an output terminal of each of the power modules.

Step 102: regulating pulse widths of switching of a power component in the controlled module according to the first output current and the second output currents, so that a peak amplitude of the second output current is substantially equal to that of the first output current when the power component in the controlled module is driven according to the regulated pulse widths.

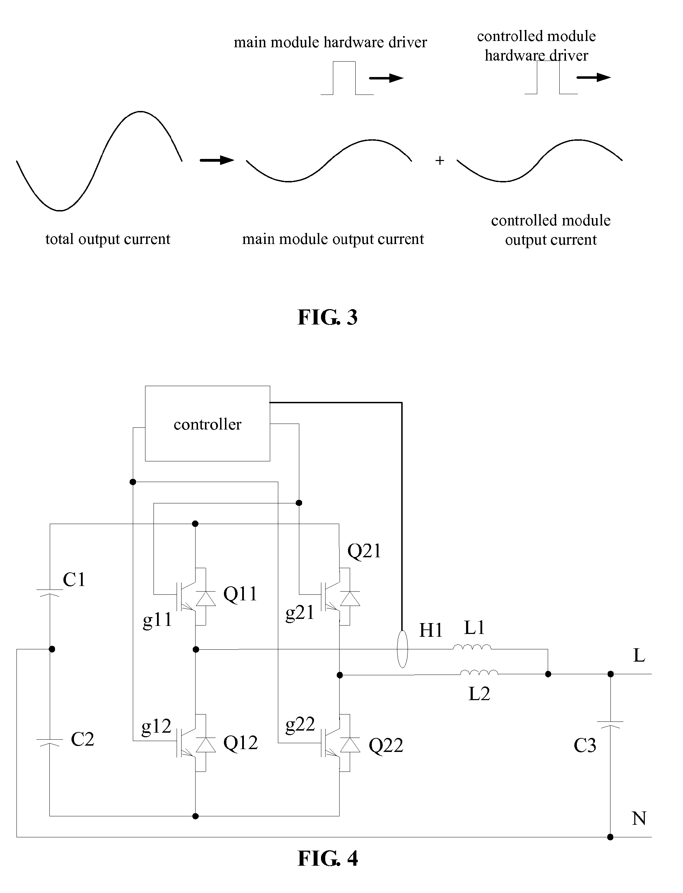

It will be appreciated that, the even distribution of the total output current among the multiple power modules (including the main module) in the PV inverter is represented mainly in equality between peak amplitudes of the output currents of the power modules. As shown in Figure 3, the output currents of the main module and the controlled module have equal peak amplitudes in both the positive half cycles and the negative half cycles, thus resulting in even distribution of the total output current. For the peak amplitudes of the output currents of the power modules to be substantially equal, it is required that drivings of corresponding power components in the power modules are the same. In the embodiment of the present invention, drivings of corresponding power components in the controlled modules are regulated according to the main module, so that drivings of respective power components in the multiple controlled modules are the same as driving of a corresponding power component in the main module.

In the process of driving the power components, the controller in the main module sends control signals such as PWM signals, and a driving circuit converts the control signals into signals for switching a corresponding power component in a power module on and off. In the case of driving a power component in a controlled module, the pulse widths of switching of the power component (i.e., the widths of the pulse being on and off) in the controlled module may be regulated.

According to a specific implementation, a compensating module may be connected between the controller of the main module and the power component of a controlled module, for compensating for the pulse widths of the control signals sent from the controller. The compensating module may be a logic device such as a Field-Programmable Gate Array (FPGA), a Complex Programmable Logic Device (CPLD). A specific compensation process may include: inputting an obtained pulse-width compensation to the compensating module, adding the inputted pulse-width compensation to the present pulse widths of the control signals to form regulated pulse widths, and controlling switching of the power component by the regulated pulse widths. To facilitate the regulating of the pulse widths of switching of a power component, a configuration parameter may be provided for the user to set via a user interface of the compensating module. In this case, the compensating module may calculate the pulse-width compensation according to the set configuration parameter. And the configuration parameter set by the user may be displayed on a display.

For example, assuming the configuration parameter is set to be -8, the compensating module, which is a logic device, calculates a pulse-width compensation corresponding to the configuration parameter: -40ns*8=-320ns, and adds the pulse-width compensation to the present pulse widths; hence the pulse width of every switching cycle of the power component is reduced by 320ns. In this example, 40ns is a minimum pulse-width regulating capability of the logic device, which may be preset in a storage. This value can be custom-defined, e.g., to be 10ns or 100ns. In addition, a smaller value indicates a higher regulating accuracy. For example, the regulating accuracy of 10ns is much higher than the regulating accuracy of 100ns.

It is noted that the terms of first output current and second output currents do not imply the sequence of the output currents, but distinguish between the output currents of the main module and of the controlled module. Moreover, the steps 101 and 102 are based on the main module to regulate driving of the power component in one controlled module. The process of regulating driving of the power component in any other controlled module is similar, and will be omitted here.

Because the Root mean square (RMS) amplitude over half cycles is proportional to the peak amplitude in the half cycles, and the RMS amplitude over half cycles is relatively easy to obtain, the equality between the peak amplitudes of the second output current and the first output current may be implemented with the equality between the RMS amplitudes of the two output currents in both the positive half cycles and the negative half cycles.

Step 103: storing difference information between the regulated pulse widths from step 102 and pulse widths of switching of a power component in the main module in the PV inverter.

The difference information here may be the different information between the regulated pulse widths of switching of a power component in the controlled module and the pulse widths of switching of a power component in the main module, or a configuration parameter set by the user as described above, or a pulse-width compensation corresponding to the configuration parameter, or the like. Therefore, with the difference information stored in the controlled module, and the driving circuit of the power component in the controlled module drives the power component in the controlled module after compensating for the pulse widths of the controlled module according to the difference information.

In the storing of the difference information, respective difference information between the regulated pulse widths corresponding to the controlled modules and the pulse widths corresponding to the main module may be stored in different address spaces in the same storage in the PV inverter, or may be stored in respective storages in the controlled modules.

It can be seen that according to the embodiment of the present invention, a first output current of a main module in the PV inverter and a second output current of a controlled module in the PV inverter are detected; pulse widths of switching of a power component in the controlled module is regulated according to the first output current and the second output current, so that a peak amplitude of the second output current is substantially equal to that of the first output current when the power component in the controlled module is driven according to the regulated pulse widths; and difference information between the regulated pulse widths and pulse widths of switching of a power component in the main module is stored in the PV inverter. Therefore, it is ensured that the total output current is distributed evenly among the multiple power modules in the PV inverter, thus achieving current balancing.

An adjustment method about an embodiment of the present invention is described below with an example which realizes online adjustment of a two-level PV inverter. As shown in Figure 4, in the two-level PV inverter, each of the power components of the controlled module and the main module includes two switching tubes. Specifically,

as an example, the two-level PV inverter includes two power modules, one being the main module and the other being the controlled module. The main module includes a controller, a power component (switching tubes Q11 and Q12), a detection circuit including a Hall element H1, and an output circuit (inductor L1). The controlled module includes a power component (switching tubes Q21 and Q22), and an output circuit (inductor L2). Collectively, the two-level PV inverter has two input terminals, series-connected bus capacitors C1 and C2 are connected between the two terminals; and two output terminals L and N. All the components above are important components of the two-level PV inverter. The two-level PV inverter may further include some other devices such as an optocoupler connected between the controller and a switching tube, a feedback circuit between the controller and the Hall element, which are not shown in Figure 4.

It will be appreciated that, the controller in the main module controls the switching tube Q11 of the main module and the switching tube Q21 of the controlled module through control terminals g11 and g21 respectively, so that switchings of the switching tubes Q11 and Q21 are the same; and controls the switching tube Q12 of the main module and the switching tube Q22 of the controlled module through control terminals g12 and g22 respectively, so that switchings of the switching tubes Q12 and Q22 are the same. Thus, the total output current is evenly distributed between respective output currents of the main module and the controlled module, which is represented in the equality between the peak amplitudes of the currents flowing through the inductor L1 and the inductor L2.

It is noted that the control of the two switching tubes Q11 and Q12 of the main module may be done in a unipolar manner or a bipolar manner. In the adjusting method according to the embodiment of the present invention, the unipolar manner is more effective. For example, controlled in a unipolar manner, in the positive half cycles of voltage, the switching tube Q11 switches on and off at a high frequency, i.e., high-frequency switching of the switching tube Q11, and the switching tube Q12 remains off; while in the negative half cycles of voltage, the switching tube Q12 switches on and off at a high frequency, i.e., high-frequency switching of the switching tube Q12, and the switching tube Q11 remains off. In the two-level PV inverter:

(1) the two-level PV inverter has an output current i (i.e., inductor current) larger than 0 and an output voltage u larger than 0 (i.e., 1>0, U>0), and the controller controls the switching tubes Q11 and Q21 to switch on; in this case, the path of the current is mainly Q11--L1 and Q21--L2; and

(2) the two-level PV inverter has an output current i (i.e., inductor current) less than 0 and an output voltage u less than 0 (i.e., I<0, U<0), and the controller controls the switching tubes Q12 and Q22 to switch on; in this case, the path of the current is mainly L1--Q12 and L2--Q22.

Therefore, when the output current and output voltage of the two-level PV inverter are in-phase, the difference between driving of the switching tube Q11 and driving of the switching tube Q21 affects the peak amplitudes of the output currents of the main module and the controlled module in the positive half cycles, and the difference between driving of the switching tube Q12 and driving of the switching tube Q22 affects the peak amplitudes of the output currents of the main module and the controlled module in the negative half cycles.

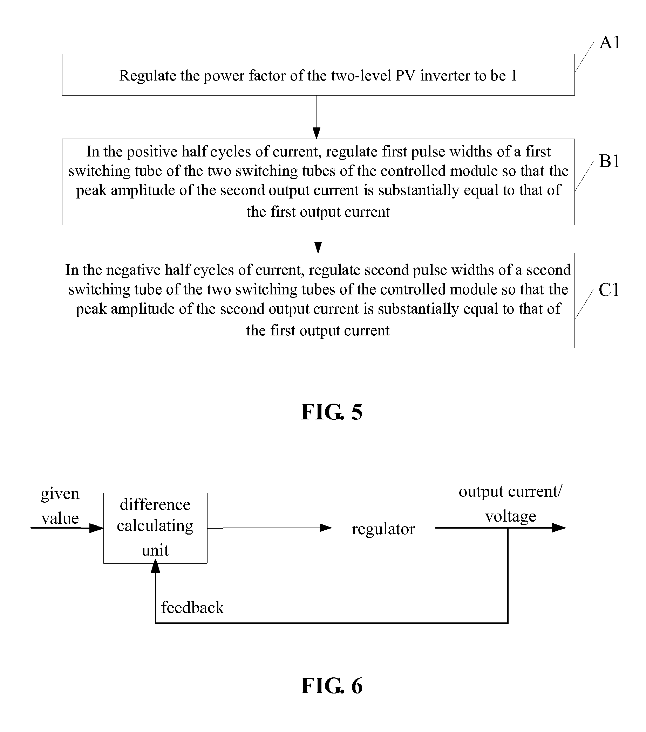

As shown in the flow chart of Figure 5, in the embodiment, the pulse widths of switching of the power component in the controlled module included in the two-level PV inverter may be regulated according to the following method.

A1: The power factor of the two-level PV inverter is regulated to be 1.

The power factor being 1 means that there is no difference in phase between the output current and the output voltage. Specifically, the regulation may be implemented with software running on the controller, or a regulation circuit between the controller and the detection circuit.

Specifically, the structure shown as in Figure 6 may be connected between the controller and the detection circuit, which mainly includes a difference calculating unit and a regulator. When the detection circuit detects the output current/voltage, it transmits a feedback to the difference calculating unit, the feedback being an instantaneous value of the current/voltage, including phase and amplitude. The difference calculating unit calculates the difference between the feedback and a given value from the controller. Correspondingly the given value also includes phase and amplitude. Finally, the regulator outputs a current/voltage having certain phase and amplitude. Thus, the phases of the voltage and current can be regulated, thereby realizing the regulation of the power factor of the circuit.

B1: When a current testing device detects a first output current and a second output current being in the positive half cycles, i.e., currents through the inductors L1 and L2 are in the positive half cycles, first pulse widths of a first switching tube Q21 of the two switching tubes in the controlled module is regulated, so that the peak amplitude of the second output current is substantially equal to that of the first output current in the positive half cycles, more specifically, the RMS amplitudes are substantially equal over the positive half cycles. The first switching tube Q21 switches on and off at a high frequency in the positive half cycles.

C1: When the current testing device detects a first output current and a second output current being in the negative half cycles, i.e., currents through the inductors L1 and L2 are in the negative half cycles, second pulse widths of a second switching tube Q22 of the two switching tubes in the controlled module is regulated, so that the peak amplitude of the second output current is substantially equal to that of the first output current in the negative half cycles, more specifically, the RMS amplitudes are substantially equal over the negative half cycles. The second switching tube Q22 switches on and off at a high frequency in the negative half cycles of current.

This can be implemented with an additional logic device between the controller and the control terminal g21 (or g22) of the switching tube Q21 (or Q22). Specifically, a configuration parameter is inputted to the logic device, and the logic device calculates a pulse-width compensation corresponding to the inputted configuration parameter and adds it to the present pulse widths to form regulated pulse widths. Therefore, after the controller sends control signals, the switching tube Q11 (or Q12) in the main module switches on and off according to the pulse widths of the control signals, and the switching tube Q21 (or Q22) in the controlled module switches on and off according to the regulated pulse widths in each switching cycle.

The step B1 may be performed before the step C1, or after the step C1. After the process A1 to C1, the difference information between the first pulse widths after regulation and the first pulse widths of the main module, as well as the difference information between the second pulse widths after regulation and the second pulse widths of the main module, will be stored in the PV inverter. Specifically, the respective difference information corresponding to the controlled modules may be stored in different address spaces in the same storage in the PV inverter, or in respective storages in the controlled modules.

With the steps A1 to C1, drivings of the two switching tubes in the controlled module included in the two-level PV inverter are regulated independently based on the main module, so that drivings of corresponding power components in the controlled module and in the main module are the same, thereby realizing current balancing.

The adjustment method above is suitable for both three-phase and single-phase two-level PV inverters. In this embodiment, a single-phase two-level PV inverter is described as an example. However, the adjustment of a three-phase two-level PV inverter is similar to that of the single-phase two-level PV inverter, which is therefore omitted here.

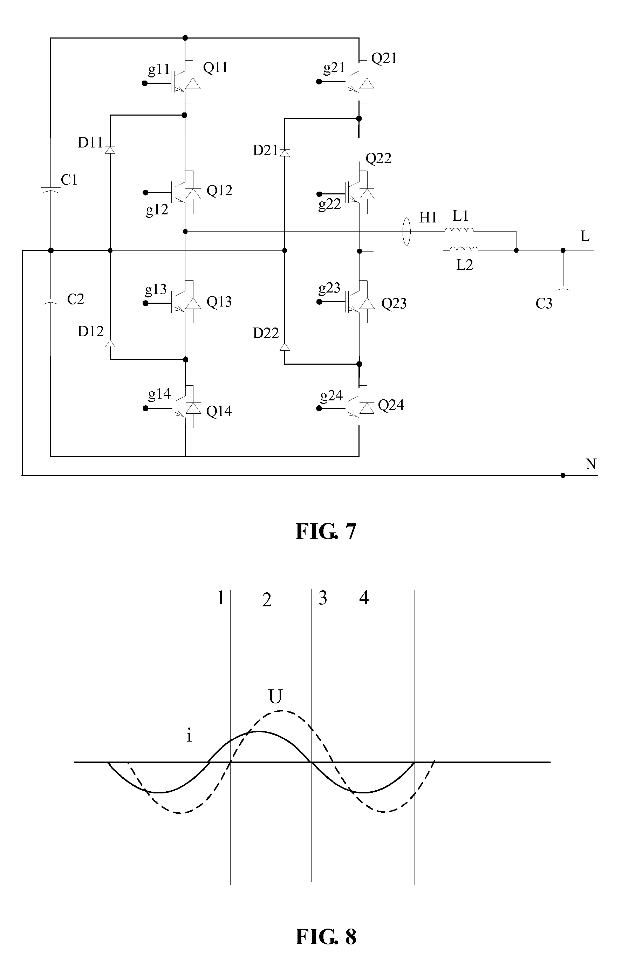

An adjustment method according to an embodiment of the present invention is described below with an example which realizes online adjustment of a three-level PV inverter. As shown in Figure 7, in the three-level PV inverter, each of the power components of the controlled module and the main module includes four switching tubes. Specifically:

as an example, the three-level PV inverter includes two power modules, one being the main module and the other being the controlled module. The main module includes a controller (not shown in Figure 7), a power component including switching tubes Q11 to Q14 and two diodes D11 and D12 connected in the same direction, a detection circuit including a Hall element H1, and an output circuit (inductor L1). The controlled module includes a power component including switching tubes Q21 to Q24 and two diodes D21 and D22 connected in the same direction, and an output circuit (inductor L2). Collectively, the three-level PV inverter has two input terminals, series-connected bus capacitors C1 and C2 are connected between the two terminals; and two output terminals L and N. All the components above are important components of the three-level PV inverter. The three-level PV inverter may further include some other devices such as an optocoupler connected between the controller and a switching tube, a feedback circuit between the controller and the Hall element, which are not shown in Figure 7.

It will be appreciated that, the controller in the main module controls the switching tube Q11 of the main module and the switching tube Q21 of the controlled module through control terminals g11 and g21 respectively, so that switchings of the switching tubes Q11 and Q21 are the same; controls the switching tube Q12 of the main module and the switching tube Q22 of the controlled module through control terminals g12 and g22 respectively, so that switchings of the switching tubes Q12 and Q22 are the same; controls the switching tube Q13 of the main module and the switching tube Q23 of the controlled module through control terminals g13 and g23 respectively, so that switchings of the switching tubes Q13 and Q23 are the same; and controls the switching tube Q14 of the main module and the switching tube Q24 of the controlled module through control terminals g14 and g24 respectively, so that switchings of the switching tubes Q14 and Q24 are the same. Thus, the total output current is evenly distributed between respective output currents of the main module and the controlled module, which is represented in the equality between the peak amplitudes of the currents flowing through the inductor L1 and the inductor L2.

It is noted that, of the four switching tubes in the main module, the switching tubes Q11 and Q13 are complementary, i.e., when the controller controls one of the switching tubes to switch on, it controls the other switching tube to switch off, and the switching tubes Q12 and Q14 are complementary. Correspondingly, of the four switching tubes in the controlled module, the switching tubes Q21 and Q23 are complementary, and the switching tubes Q22 and Q24 are complementary. In the three-level PV inverter:

(1) the three-level PV inverter has an output current i larger than 0 and an output voltage u less than 0 (i.e., I>0, U<0), hence, the controller controls the switching tubes Q12 and Q22 to switch on in the first interval; in this case, the path of the current is mainly D11--Q12--L1 and D21--Q22--L2;

(2) the three-level PV inverter has an output current i larger than 0 and an output voltage u larger than 0 (i.e., I>0, U>0), hence, the controller controls the switching tubes Q11, Q12, Q21 and Q22 to switch on in the second interval; in this case, the path of the current is mainly Q11--Q12--L1 and Q22--Q22--L2;

(3) the three-level PV inverter has an output current i less than 0 and an output voltage u larger than 0 (i.e., I<0, U>0), hence, the controller controls the switching tubes Q13 and Q23 to switch on in the third interval; in this case, the path of the current is mainly L1--Q13--D12 and L2--Q23--D22; and

(4) the three-level PV inverter has an output current i less than 0 and an output voltage u less than 0 (i.e., I<0, U<0), hence, the controller controls the switching tubes Q13, Q14, Q23 and Q24 to switch on in the fourth interval; in this case, the path of the current is mainly LI-Q13-Q14 and L2--Q23--Q24.

Therefore, when the three-level PV inverter is in the positive half cycles of current, in the case of the first interval, the difference between driving of the switching tube Q12 and driving of the switching tube Q22 affects the peak amplitudes of the output currents of the main module and the controlled module in the positive half cycles, as well as the RMS amplitudes; in the case of the second interval, the switching tubes Q12 and Q22 remain on in the positive half cycles, hence, although the current flows through the switching tubes Q12 and Q22, only the difference between driving of the switching tube Q11 and driving of the switching tube Q21 affects the peak amplitudes of the output currents of the main module and the controlled module in the positive half cycles, as well as the RMS amplitudes; and

when the three-level PV inverter is in the negative half cycles of current, in the case of the third interval, the difference between driving of the switching tube Q13 and driving of the switching tube Q23 affects the peak amplitudes of the output currents of the main module and the controlled module in the negative half cycles, as well as the RMS amplitudes; in the case of the fourth interval, the switching tubes Q13 and Q23 remain on in the negative half cycles, hence, although the current flows through the switching tubes Q13 and Q23, only the difference between driving of the switching tube Q14 and driving of the switching tube Q24 affects the peak amplitudes of the output currents of the main module and the controlled module in the negative half cycles, as well as the RMS amplitudes.

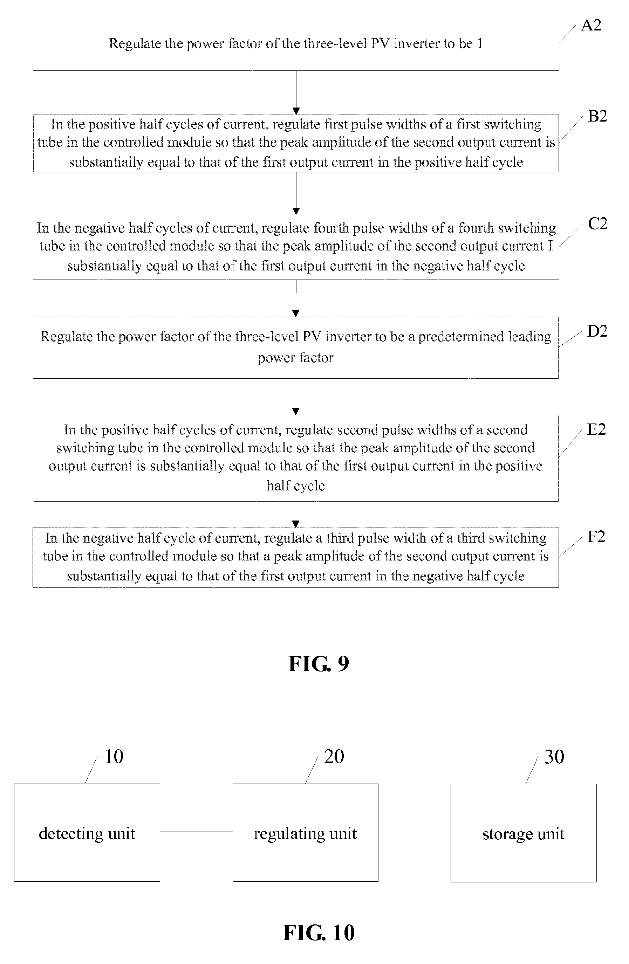

As shown in the flow chart of Figure 9, in the embodiment, the pulse widths of switching of the power component in the controlled module included in the three-level PV inverter may be regulated according to the following method.

A2: The power factor of the three-level PV inverter is regulated to be 1.

The power factor being 1 means that there is no difference in phase between the output current (inductor current) and the output voltage. Specifically, the regulation may be implemented with software running on the controller, or a regulation circuit between the controller and the detection circuit. In this case, the relationship between the output current and the output voltage of the three-level PV inverter appears only in the second and fourth intervals.

B2: When a current testing device detects a first output current and a second output current in the positive half cycles, i.e., currents through the inductors L1 and L2 are in the positive half cycles, a first pulse widths of a first switching tube Q21 of the four switching tubes in the controlled module is regulated, so that the peak amplitude of the second output current is substantially equal to that of the first output current in the positive half cycles, more specifically, the RMS amplitudes are substantially equal over the positive half cycles. The first switching tube Q21 switches on and off at a high frequency in the positive half cycles of current.

C2: When the current testing device detects a first output current and a second output current in the negative half cycles, i.e., currents on the inductors L1 and L2 are in the negative half cycles, the fourth pulse widths of the fourth switching tube Q24 in the controlled module is regulated, so that the peak amplitude of the second output current is substantially equal to that of the first output current in the negative half cycles, more specifically, the RMS amplitudes are substantially equal over the negative half cycles. The fourth switching tube Q24 switches on and off at a high frequency in the negative half cycles of current.

This can be implemented with an additional logic device between the controller and the control terminal g21 (or g22) of the switching tube Q21 (or Q24). Specifically, a configuration parameter is inputted to the logic device, and the logic device calculates a pulse-width compensation corresponding to the inputted configuration parameter and adds it to the present pulse widths to form regulated pulse widths. Therefore, after the controller sends control signals, the switching tube Q11 (or Q14) in the main module switches on and off according to the pulse widths of the control signals, and the switching tube Q21 (or Q24) in the controlled module switches on and off according to the regulated pulse widths in each switching cycle.

The step B2 may be performed before the step C2, or after the step C2. After the process A2 to C2, the difference information between the first pulse widths after regulation and the first pulse widths of the main module, as well as the difference information between the fourth pulse widths after regulation and the fourth pulse widths of the main module, will be stored in the PV inverter. Specifically, the respective difference information corresponding to the controlled modules may be stored in different address spaces in the same storage in the PV inverter, or in respective storages in the controlled modules.

D2: The power factor of the three-level PV inverter is regulated to be a predetermined leading power factor.

The power factor means the cosine of the subtraction of the phase of the output current leads the phase of the output voltage, e.g., it may be a value between 0 and 0.8. Specifically, the regulation may be implemented with software running on the controller, or a regulation circuit between the controller and the detection circuit. As shown in Figure 8, when the power factor is a predetermined leading power factor, four intervals, i.e., the first interval to the fourth interval, can be obtained based on the relationship between the current I and the voltage U.

E2: When the current testing device detects a first output current and a second output current in the positive half cycles, i.e., currents through the inductors L1 and L2 are in the positive half cycles, the second pulse widths of the second switching tube Q22, which is complementary to the fourth switching tube Q24, in the controlled module is regulated, so that the peak amplitude of the second output current is substantially equal to that of the first output current in the positive half cycles, more specifically, the RMS amplitudes are substantially equal over the positive half cycles. The second switching tube Q22 remains on in positive half cycles of voltage, and switches on and off at a high frequency in negative half cycles of voltage.

F2: When the current testing device detects a first output current and a second output current in the negative half cycles, i.e., currents through the inductors L1 and L2 are in the negative half cycles, the third pulse widths of the third switching tube Q23, which is complementary to the first switching tube Q21, in the controlled module is regulated, so that the peak amplitude of the second output current is substantially equal to that of the first output current in the negative half cycles, more specifically, the RMS amplitudes are substantially equal over the negative half cycles. The third switching tube Q23 remains on in negative half cycles of voltage, and switches on and off at a high frequency in positive half cycles of voltage.

This can be implemented with an additional logic device between the controller and the control terminal g22 (or g23) of the switching tube Q22 (or Q23). Specifically, a configuration parameter is inputted to the logic device, and the logic device calculates a pulse-width compensation corresponding to the inputted configuration parameter and adds it to the present pulse widths to form regulated pulse widths. Therefore, after the controller sends control signals, the switching tube Q22 (or Q23) in the main module switches on and off according to the pulse widths of the control signals, and the switching tube Q22 (or Q23) in the controlled module switches on and off according to the regulated pulse widths in each switching cycle.

The step E2 may be performed before the step F2, or after the step F2. After the process D2 to F2, the difference information between the second pulse widths after regulation and the second pulse widths of the main module, as well as the difference information between the third pulse widths after regulation and the third pulse widths of the main module, will be stored in the PV inverter. Specifically, the respective difference information corresponding to the controlled modules may be stored in different address spaces in the same storage in the PV inverter, or in respective storages in the controlled modules.

With the steps A2 to F2, drivings of the four switching tubes in the controlled module included in the three-level PV inverter are regulated independently based on the main module, so that drivings of corresponding power components in the controlled module and in the main module are the same, thereby realizing current balancing.

The adjustment method above is suitable for both three-phase and single-phase three-level PV inverters. In this embodiment, a single-phase three-level PV inverter is described as an example. However, the adjustment of a three-phase three-level PV inverter is similar to that of the single-phase three-level PV inverter, which is therefore omitted here.

An embodiment of the present invention also provides an apparatus for adjusting a PV inverter. Figure 10 shows the structure of the adjusting apparatus, which includes:

a detecting unit 10, adopted to detect a first output current of a main module in the PV inverter and a second output current of a controlled module in the PV inverter;

an regulating unit 20, adopted to regulate pulse widths of switching of a power component in the controlled module according to the first output current and the second output current, so that a peak amplitude of the second output current is substantially equal to that of the first output current when the power component in the controlled module is driven according to the regulated pulse widths; and

a storage unit 30, adopted to store difference information between the regulated pulse widths and the corresponding pulse widths of switching of a power component in the main module in the PV inverter.

The storage unit 30 may store respective difference information corresponding to the controlled modules in different address spaces in the same storage in the PV inverter, or respective storages in the controlled modules.

It can be seen that according to the embodiment of the present invention, the detecting unit 10 detects the first output current of a main module in the PV inverter and the second output current of a controlled module in the PV inverter, the regulating unit 20 regulates pulse widths of switching of a power component in the controlled module according to the first output current and the second output current, so that a peak amplitude of the second output current is substantially equal to that of the first output current when the power component in the controlled module is driven according to the regulated pulse widths, and the storage unit 30 stores difference information between the regulated pulse widths and the corresponding pulse widths of switching of a power component in the main module in the PV inverter. Therefore, it is ensured that the total output current is distributed evenly among the multiple power modules in the PV inverter, thus achieving current balancing.

It will be appreciated that, the regulating unit 20 in the apparatus for adjusting a PV inverter according to the embodiment of the present invention may include a setting unit 201, a display unit 202, a controller 203 and a programmable logic device 204.

The setting unit 201 is adopted to set a configuration parameter, e.g., the parameter may set to be a value between -10 and 10. The setting unit 201 may be a user interface, and the user can input the configuration parameter to the adjusting apparatus through the setting unit 201.

The display unit 202 is adopted to display the configuration parameter set by the setting unit 201.

The controller 203 may be a DSP or a CPU, and is adopted to send control signals for controlling driving of power components in the main module and the controlled module.

The programmable logic device 204 may be FPGA or CPLD, and is adopted to regulate the pulse widths of the power component in the controlled module, so that peak amplitude of the second output current is substantially equal to that of the first output current when the power component in the controlled module is driven according to the regulated pulse widths.

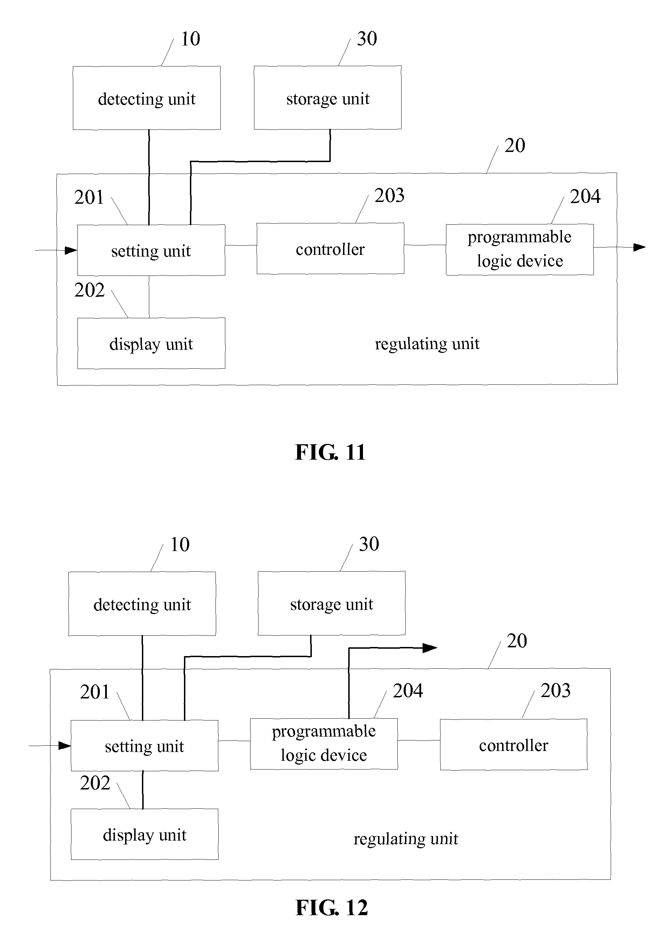

As shown in Figure 11, in an embodiment, the user can input the configuration parameter through the setting unit 201, e.g., any value between -10 and 10. The storage unit 30 may store the configuration parameter in the PV inverter, thereby avoiding data loss in the case of power outage of the apparatus according to the embodiment. In addition, to facilitate the adjustment, the set configuration parameter may be displayed visually in the display unit 202. Moreover, the setting unit 201 may set an appropriate configuration parameter by comparison between the first output current and the second output current detected by the detecting unit 10, e.g., comparison between the RMS amplitudes of the two output currents over half cycles.

According to a specific implementation, the setting unit 201 may send a preset configuration parameter to the controller 203 via a communication protocol between the setting unit 201 and the controller 203; when sending control signals for controlling driving of the power component in the controlled module, the controller 203 reads the configuration parameter stored in the storage unit 30 and transmits it to the programmable logic device 204; and the programmable logic device 204 calculates a corresponding pulse-width compensation according to the inputted configuration parameter, adds the calculated pulse-width compensation to the present pulse widths, to form regulated pulse widths, and drive the power component in the controlled module by the regulated pulse widths. The programmable logic device 204 is a device connected between a control terminal of the power component in the controlled module and the controller 203.

The term 'present pulse widths' refers to the pulse widths of the control signals (i.e., pulse signals) sent from the controller 203. The programmable logic device 204 may calculate the pulse-width compensation by multiplying a pulse-width regulating capability value by the configuration parameter, the pulse-width regulating capability value being a value in time.

As shown Figure 12, in another embodiment, the regulating unit 20 may have a structure similar to that of the regulating unit in the embodiment shown in Figure 11. The difference lies in that in this embodiment, once the user inputs the configuration parameter by the setting unit 201, the programmable logic device 204 directly calculates the pulse-width compensation according to the configuration parameter, adds the calculated pulse-width compensation to the pulse widths of the control signals sent from the controller 203, to form regulated pulse widths, and drives the power component in the controlled module by the regulated pulse widths.

An apparatus for adjusting a PV inverter according to an embodiment of the present invention is described below with an example which realizes adjustment of a three-level PV inverter. As shown in Figure 7, in the three-level PV inverter, each of the power components of the controlled module and the main module includes four switching tubes. And the regulating unit 20 may regulate as described below.

When the power factor of the three-level PV inverter is 1, in the positive half cycles of the first and second output currents detected by the detecting unit 10, the regulating unit 20 sets a configuration parameter by the setting unit 201, to regulate the first pulse widths of the first switching tube of the four switching tubes in the controlled module, so that the peak amplitude of the second output current is substantially equal to that of the first output current in the positive half cycles, the first switching tube switching on and off at a high frequency in the positive half cycles of current; while in the negative half cycles of the first and second output currents detected by the detecting unit 10, the regulating unit 20 sets another configuration parameter by the setting unit 201, to regulate the fourth pulse widths of the fourth switching tube of the four switching tubes in the controlled module, so that the peak amplitude of the second output current is substantially equal to that of the first output current in the negative half cycles, the fourth switching tube switching on and off at a high frequency in the negative half cycles of current.

When the power factor of the three-level PV inverter is a predetermined leading power factor, in the positive half cycles of the first and second output currents, the regulating unit 20 sets yet another configuration parameter by the setting unit 201, to regulate the second pulse widths of the second switching tube of the four switching tubes in the controlled module, so that the peak amplitude of the second output current is substantially equal to that of the first output current, the second switching tube remaining on in positive half cycles of voltage and switching on and off at a high frequency in negative half cycles of voltage; while in the negative half cycles of the first and second output currents, the regulating unit 20 sets yet another configuration parameter by the setting unit 201, to regulate the third pulse widths of the third switching tube of the four switching tubes in the controlled module, so that the peak amplitude of the second output current is substantially equal to that of the first output current in the negative half cycles, the third switching tube remaining on in negative half cycles of voltage and switching on and off at a high frequency in positive half cycles of voltage.

The storage unit 30 stores the four parameters set by the setting unit 201 for the four corresponding switching tubes in the PV inverter.

An apparatus for adjusting a PV inverter according to an embodiment of the present invention is described below with an example which realizes adjustment of a two-level PV inverter. As shown in Figure 4, in the two-level PV inverter, each of the power components of the controlled module and the main module includes two switching tubes. And the regulating unit 20 may regulate as described below.

When the power factor of the two-level PV inverter is 1, in the positive half cycles of the first and second output currents detected by the detecting unit 10, the regulating unit 20 sets a configuration parameter by the setting unit 201, to regulate the first pulse widths of the first switching tube of the two switching tubes in the controlled module, so that the peak amplitude of the second output current is substantially equal to that of the first output current in the positive half cycles, the first switching tube switching on and off at a high frequency in the positive half cycles of current; while in the negative half cycles of the first and second output currents detected by the detecting unit 10, the regulating unit 20 sets another configuration parameter by the setting unit 201, to regulate the second pulse widths of the second switching tube of the two switching tubes in the controlled module, so that the peak amplitude of the second output current is substantially equal to that of the first output current in the negative half cycles, the second switching tube switching on and off at a high frequency in the negative half cycles of current.

The storage unit 30 stores the two parameters set by the setting unit 201 for the two corresponding switching tubes in the PV inverter.

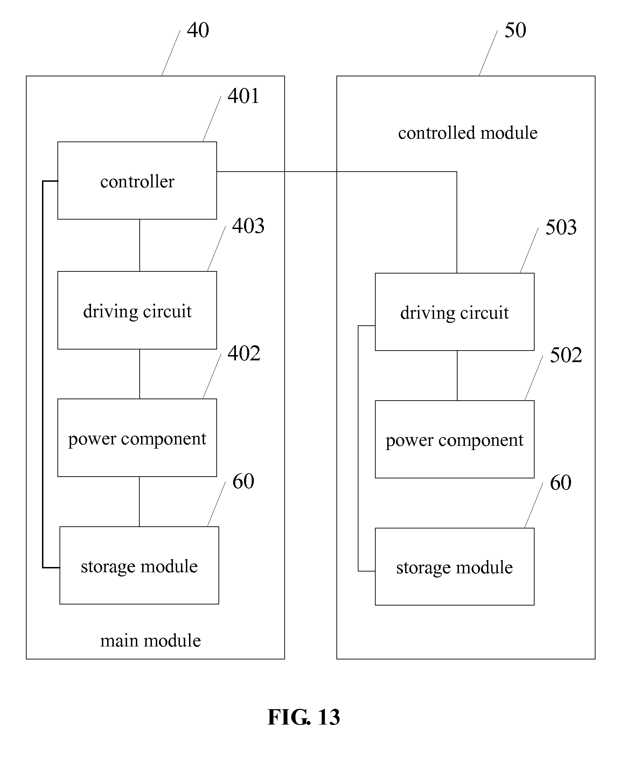

With the grid-connected adjustment of the PV inverter described above, as shown in Figure 13, the PV inverter may include: a storage module 60, a main module 40 and at least one controlled module 50 (one main module and one controlled modules are shown as an example in Figure 13). The main module 40 may include a controller 401, a power component 402 and a driving circuit 403 for the power component; and the controlled module 50 may include a power component 502 and a driving circuit 503 for the power component.

(1) In the main module 40,

the controller 401 is adopted to send control signals for controlling driving of a power component in the main module 40 and driving of a power component in the controlled module 50;

the driving circuit 403 is adopted to drive the power component 402 in the main module 40 according to pulse widths of the control signals sent from the controller 401.

Specifically, the driving circuit 403 may convert the control signals sent from the controller 401 into signals that can drive the power component 402 to switch on and off.

(2) In the controlled module 50,

the driving circuit 503 is adopted to obtain difference information stored in a storage module 30 of the PV inverter, compensate for the pulse widths of the control signals according to the difference information, and drive the power component 502 in the controlled module 50 according to the compensated pulse widths; the difference information is the different information between pulse widths of switching of the power component 502 in the controlled module 50 and the pulse widths of the control signals; and

the storage module 60 is adopted to store difference information between the pulse widths corresponding to each of the controlled modules and the pulse widths corresponding to the main module.

It will be appreciated that, in the PV inverter, respective difference information corresponding to the controlled modules 50 may be stored in different address spaces in the same storage module 60. Alternatively, as shown in Figure 13, there may be a storage module 60 in each controlled module 50, storing the difference information corresponding to the controlled module 50. The difference information may be a configuration parameter preset by the user, or a pulse-width compensation corresponding to the configuration parameter, or the like.

In the controlled module 50, when the difference information obtained by the driving circuit 503 is a configuration parameter preset by the user, driving of the power component 502 may be implemented with the following structure, which specifically includes an adding unit and a driving unit.

The adding unit is adopted to, when the obtained difference information is a configuration parameter preset by the user, calculate a pulse-width compensation corresponding to the preset configuration parameter, and add the pulse-width compensation on the pulse widths of the control signals to form new pulse widths. The driving unit is adopted to drive the power component 502 in the controlled module 50 according to the new pulse widths formed by the adding unit.

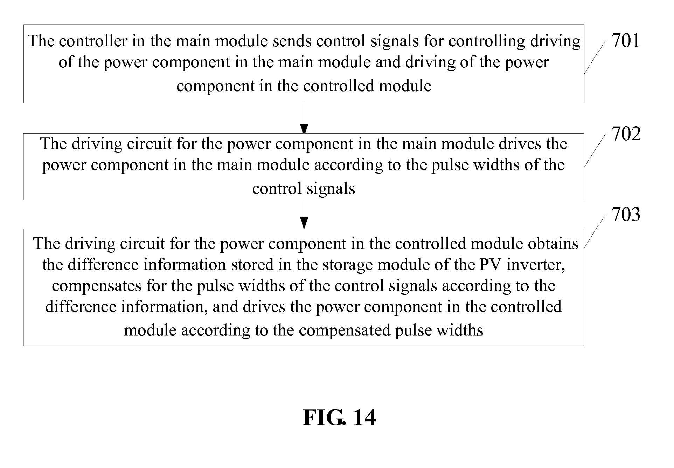

As shown in Figure 14, driving of the PV inverter according to the embodiment may include the following steps:

Step 701, the controller 401 in the main module 40 sends control signals for controlling driving of the power component in the main module 40 and driving of the power component in the controlled module 50;

Step 702, the driving circuit 403 for the power component 402 in the main module 40 drives the power component 402 in the main module 40 according to the pulse widths of the control signals; and

Step 703, the driving circuit 503 for the power component 502 in the controlled module 50 obtains the difference information stored in the storage module 60 of the PV inverter, compensates for the pulse widths of the control signals according to the difference information, and drives the power component 502 in the controlled module 50 according to the compensated pulse widths.

The difference information here is the different information between the pulse widths of switching of the power component 502 in the controlled module 50 and the pulse widths of switching of the power component in the main module. It may be a configuration parameter preset by the user, or a pulse-width compensation corresponding to the configuration parameter. When the difference information is a configuration parameter, according to a specific implementation, the driving circuit 503 calculates a pulse-width compensation according to the difference parameter, adds the pulse-width compensation to the pulse widths of the control signals to form new pulse widths, and drives the power component 502 in the controlled module 50 according to the new pulse widths.

It can be seen that, by using the apparatus for adjusting the PV inverter in the embodiment of the present invention, drivings of respective power components in the controlled modules are regulated based on the main module in the PV inverter, and adjustment values are stored in a storage module; then in driving, the driving circuit for the power component in the controlled module reads the difference information stored in the storage module, compensates for the pulse widths of the control signals sent from the controller according to the difference information, and drives the power component in the controlled module according to the compensated pulse widths. Therefore, it is ensured that drivings of the power components are the same and the total output current is evenly distributed, thus achieving current balancing.

A method for adjusting a PV inverter, a method for driving a PV inverter, and apparatuses thereof according to the embodiments of the present invention are described in detail above. The principle and implementations of the present invention are disclosed by way of example. The description of the embodiments is intended solely to enable a better understanding of the idea of the present invention. Moreover, modifications can be made to the specific implementations and application range by those skilled in the art based on the idea of the present invention. Therefore, the disclosure of the specification shall not be interpreted as limiting the scope of the present invention.

## Claims

1. A method for adjusting a photovoltaic, PV, inverter, comprising:
detecting a first output current of a main module in the PV inverter and a second output current of a controlled module in the PV inverter;
regulating pulse widths of switching of a power component in the controlled module according to the first output current and the second output current, so that a peak amplitude of the second output current is substantially equal to that of the first output current when the power component in the controlled module is driven according to the regulated pulse widths; and
storing difference information between the regulated pulse widths of switching of a power component in the controlled module and pulse widths of switching of a power component in the main module in the PV inverter.

2. The method according to claim 1, wherein the PV inverter is a three-level PV inverter, and in the three-level PV inverter the power component of the main module and the power component of the controlled module each comprises four switching tubes,
and wherein regulating the pulse widths of switching of the power component in the controlled module comprises:
when the power factor of the three-level PV inverter is 1,
regulating first pulse widths of a first switching tube of the four switching tubes of the controlled module in positive half cycles of the first and second output currents, so that a peak amplitude of the second output current is substantially equal to that of the first output current in the positive half cycles, the first switching tube switching on and off at a high frequency in the positive half cycles of the currents; and
regulating fourth pulse widths of a fourth switching tube of the four switching tubes in negative half cycles of the first and second output currents, so that the peak amplitude of the second output current is substantially equal to that of the first output current in the negative half cycles, the fourth switching tube switching on and off at a high frequency in the negative half cycles of the currents;
when the power factor of the three-level PV inverter is a predetermined leading power factor,
regulating second pulse widths of a second switching tube of the four switching tubes of the controlled module in positive half cycles of the first and second output currents, so that a peak amplitude of the second output current is substantially equal to that of the first output current in the positive half cycles, the second switching tube remaining on in the positive half cycles of voltage and switching on and off at a high frequency in the negative half cycles of voltage; and
regulating the fourth pulse widths of the fourth switching tube, which remains on in negative half cycles of voltage, of the four switching tubes of the controlled module in the negative half cycles of the first and second output currents, so that the peak amplitude of the second output current is substantially equal to that of the first output current in the negative half cycles, the third switching tube remaining on in the negative half cycles of voltage and switching on and off at a high frequency in the positive half cycles of voltage,
and wherein storing difference information between the regulated pulse widths and the pulse widths of switching of the power component in the main module in the PV inverter comprises:
storing the difference information between the regulated first pulse widths of the power component in the controlled module and the first pulse widths of the power component in the main module , the difference information between the regulated second pulse widths of the power component in the controlled module and the second pulse widths of the power component in the main module, the difference information between the regulated third pulse widths of the power component in the controlled module and the third pulse widths of the power component in the main module and the difference information between the regulated fourth pulse widths of the power component in the controlled module and the fourth pulse widths of the power component in the main module in the PV inverter.

3. The method according to claim 1, wherein the PV inverter is a two-level PV inverter, and in the two-level PV inverter the power component of the main module and the power component of the controlled module each comprises two switching tubes,
and wherein regulating the pulse widths of switching of the power component in the controlled module comprises:
when the power factor of the two-level PV inverter is 1,
regulating the first pulse widths of a first switching tube of the two switching tubes of the controlled module in positive half cycles of the first and second output currents, so that the peak amplitude of the second output current is substantially equal to that of the first output current in the positive half cycles, the first switching tube switching on and off at a high frequency in the positive half cycles of the currents; and
regulating the second pulse widths of the second switching tube of the two switching tubes of the controlled module in negative half cycles of the first and second output currents, so that the peak amplitude of the second output current is substantially equal to that of the first output current in the negative half cycles, the second switching tube switching on and off at a high frequency in the negative half cycles of currents,
and wherein storing the difference information between the regulated pulse widths and the present pulse widths of switching of the power component in the main module in the PV inverter comprises:
storing the difference information between the regulated first pulse widths of the power component in the controlled module and the present pulse widths of the power component in the main module and difference information between the regulated second pulse widths widths of the power component in the controlled module and the present pulse widths of the power component in the main module in the PV inverter.

4. The method according to claim 2 or claim 3, wherein regulating the pulse widths comprises:
setting a configuration parameter, calculating a corresponding pulse-width compensation according to the configuration parameter, and adding the calculated pulse-width compensation to the present pulse widths to form regulated pulse widths;
and wherein storing the difference information between the regulated pulse widths of the power component in the controlled module and the present pulse widths of switching of the power component in the main module in the PV inverter comprises:
storing the set configuration parameter in the PV inverter, with each of the switching tubes corresponding to a configuration parameter; and
and wherein the method further comprises:
displaying the configuration parameter.

5. A method for driving a photovoltaic, PV, inverter, applicable to a PV inverter comprising a main module and at least one controlled module, wherein the method comprises:
sending, by a controller in the main module, control signals for controlling driving of a power component in the main module and driving of a power component in the controlled module;
driving, by a driving circuit for the power component in the main module, the power component in the main module according to pulse widths of the control signals; and
obtaining, by a driving circuit for the power component in the controlled module, difference information stored in the PV inverter, compensating for the pulse widths of the control signals according to the difference information, and driving the power component in the controlled module according to the compensated pulse widths, the difference information being different information between pulse widths of switching of the power component in the controlled module and pulse widths of switching of the power component in the main module.

6. The method according to claim 5, wherein the obtained difference information is a configuration parameter preset by a user, and the driving circuit for the power component in the controlled module compensating for the pulse widths of the control signals according to the difference information and driving the power component in the controlled module according to the compensated pulse widths; specifically ,it comprises:
calculating a corresponding pulse-width compensation according to the preset configuration parameter, adding the pulse-width compensation to the pulse widths of the control signals to form new pulse widths; and
driving the power component in the controlled module according to the new pulse widths.

7. The method according to claim 5 or claim 6, wherein respective difference information corresponding to controlled modules are stored in different address spaces in the same storage of the PV inverter; or
difference information corresponding to each controlled module is stored in the controlled module in the PV inverter.

8. An apparatus for adjusting a photovoltaic, PV, inverter, comprising:
a detecting unit, adopted to detect a first output current of a main module in the PV inverter and a second output current of a controlled module in the PV inverter;
a regulating unit, adopted to regulate pulse widths of switching of a power component in the controlled module according to the first output current and the second output current, so that the peak amplitude of the second output current is substantially equal to that of the first output current when the power component in the controlled module is driven according to the regulated pulse widths; and
a storage unit, adopted to store difference information between the regulated pulse widths of the power component in the controlled module and present pulse widths of switching of a power component in the main module in the PV inverter.

9. The apparatus according to claim 8, wherein the regulating unit comprises a controller and a programmable logic device,
the controller is adopted to send control signals for controlling driving of the power component in the main module and driving of the power component in the controlled module; and
the programmable logic device is adopted to regulate the pulse widths of switching of the power component in the controlled module, so that the peak amplitude of the second output current is substantially equal to that of the first output current when the power component in the controlled module is driven according to the regulated pulse widths.

10. The apparatus according to claim 9, wherein the regulating unit further comprises a setting unit adopted to set a configuration parameter;
the programmable logic device is further adopted to calculate a corresponding pulse-width compensation according to the configuration parameter set by the setting unit, and add the calculated pulse-width compensation to the present pulse widths to form regulated pulse widths; and
the storage unit is further adopted to store the configuration parameter set by the setting unit in the PV inverter.

11. The apparatus according to claim 10, further comprising a display unit adopted to display the configuration parameter set by the setting unit.

12. A PV inverter, comprising a storage module, a main module and at least one controlled module, wherein the main module comprises a controller, a power component and a driving circuit for the power component, and the controlled module comprises a power component and a driving circuit for the power component;
the controller is adopted to send control signals for controlling driving of a power component in the main module and driving of a power component in the controlled module;
the driving circuit for the power component in the main module is adopted to drive the power component in the main module according to pulse widths of the control signals;
the driving circuit for the power component in the controlled module is adopted to obtain difference information stored in the PV inverter, compensate for the pulse widths of the control signals according to the difference information, and drive the power component in the controlled module according to the compensated pulse widths, the difference information being different information between pulse widths of switching of the power component in the controlled module and pulse widths of switching of the power component in the main module; and
the storage module is adopted to store the difference information between pulse widths corresponding to each controlled module and pulse widths corresponding to the main module.

13. The PV inverter according to claim 12, wherein the driving circuit for the power component in the controlled module comprises:
an adding unit, adopted to, when the obtained difference information is a configuration parameter preset by a user, calculate a corresponding pulse-width compensation according to the preset configuration parameter, and add the pulse-width compensation to the pulse widths of the control signals to form new pulse widths; and
a driving unit, adopted to drive the power component in the controlled module according to the new pulse widths formed by the adding unit.

14. The PV inverter according to claim 12 or 13, wherein respective difference information corresponding to controlled modules are stored in different address spaces in the same storage of the PV inverter; or
difference information corresponding to each controlled module is stored in the controlled module in the PV inverter.
